Europäisches Patentamt

European Patent Office

Office européen des brevets

(19)

(11) Publication number: **0 044 226**
A1

(12) **EUROPEAN PATENT APPLICATION**

(21) Application number: **81303253.9**

(22) Date of filing: **15.07.81**

(51) Int. Cl.³: **C 08 J 9/04**
**C 08 G 18/14, B 29 D 27/04**

(30) Priority: **15.07.80 GB 8023041**

(43) Date of publication of application:
**20.01.82 Bulletin 82/3**

(84) Designated Contracting States:
**AT BE CH DE FR IT LI LU NL SE**

(71) Applicant: Blackwell, Brian James
Sutton Grange Parvey Lane, Sutton
Macclesfield Cheshire(GB)

(71) Applicant: Del Carpio Conde, Bernardo Miguel Angel
Ibiza 35
Madrid(ES)

(72) Inventor: Blackwell, Brian James
Sutton Grange Parvey Lane, Sutton
Macclesfield Cheshire(GB)

(72) Inventor: Del Carpio Conde, Bernardo Miguel Angel
Ibiza 35
Madrid(ES)

(74) Representative: Quest, Barry
M'CAW & CO. 41-51 Royal Exchange Cross Street
Manchester M2 7BD(GB)

(54) Production of synthetic plastics foam material.

(57) Polyurethane foam is formed by the reaction of a polyisocyanate with a polyol in the presence of water. The water reacts with the isocyanate to give carbon dioxide gas which causes the reaction mixture to foam.

The foaming is carried out under controlled conditions of pressure less or greater than atmospheric pressure.

EP 0 044 226 A1

Croydon Printing Company Ltd.

(PCT13009)                    — 1 —
(2.7.81)

PRODUCTION OF SYNTHETIC PLASTICS FOAM MATERIAL

TECHNICAL FIELD OF THE INVENTION

The invention concerns the production of synthetic plastics foam materials and has particular, though not exclusive, reference to the production of polyurethane foam material in block form.

The world consumption of polyurethane foam is at a high level and is widely spread geographically. Accordingly, its manufacture is the subject of constant studies in order to find new methods whereby its range of usage may be widened by obtaining new types of foam and at the same time reducing the cost.

BACKGROUND ART

The conventional methods of producing polyurethane foam are mainly based on a mixture consisting basically of polyol, toluene diisocyanate (TDI), water, silicone, and various catalyst agents. The polyol reacts with a part of the TDI to produce polyurethane, whilst a part of the TDI reacts with water to give $CO_2$ and amines. The amines, in their turn, react with another part of the TDI to produce urea. The $CO_2$ promotes foaming of the polyurethane, thereby determining its density, and the urea gives the hardness to the finished product. Silicone stabilizes the foam and regulates the size of the foam cell, whilst the various catalysts speed up the formation of gas and the gelling of the foamed mix.

In the conventional foam-making process both the mixing of the individual components and the resultant chemical reactions take place at atmospheric pressure and at a temperature of approximately $22^{\circ}$C.

When it is required to produce very soft foam, it is known to add a fluorocarbon such as monofluorotrichloromethane to the mix to increase the foam volume without varying the amount of urea, thus reducing both the density and the hardness.

DISCLOSURE OF THE INVENTION

The primary object of the invention is to produce cheaper foams than has hitherto been possible, and, furthermore, to extend the range of available foams by suitable selection of foam density and hardness.

According to the present invention there is proposed a method for the production of synthetic foamed plastics materials using formulations based on a polyol, a polyisocyanate and a blowing agent, characterised by foaming under controlled conditions of pressure.

The polyol may comprise any suitable polyhydroxyl compound or combination of substances such as are conventionally used in the polyurethane process.

The polyisocyanate may also comprise any suitable substance or combination of substances especially the substance known as toluene diisocyanate (TDI).

Most preferably the presence of water is relied upon to provide the blowing agent, such water reacting with the isocyanate to give carbon dioxide gas as described above, and this may constitute the only blowing agent. Alternatively or additionally however other blowing agents may be used including volatile organic compounds such as fluorocarbons.

Other substances as conventionally used in the polyurethane process, such as silicone and catalysts
(e.g. amine and/or organometallic catalysts) may be
incorporated as desired and as appropriate.

The process may be operated at conventional
temperature levels and using conventional apparatus
or otherwise as desirable and as suitable. In a particularly preferred embodiment the process is operated
in a closed-circuit system.

With the method of the invention, when foams are
made under pressures greater than atmospheric, under
certain conditions, the cells can be completely open
due to bursting and due to implosion when the foam is
produced under a pressure lower than atmospheric, that
is to say when the pressure difference between the
inside and outside of the cell is such as to break
the cellular membrane.

In conditions of reduced pressure, relative to
atmospheric pressure at which foaming occurs with the
conventional process, the volume of $CO_2$ produced from
a standard formulation of the kind described above
increases to increase the degree of foaming and give
a product of considerably greater volume. The
resultant foam is, however, much softer than foam of
the same density produced under normal conditions of
pressure.

If it is required to produce a foam of normal
characteristics as regards density and hardness, the
increased volume of $CO_2$ resulting from the lower
process pressure reduces the consumption of $CO_2$ and
consequently of water and TDI, such reductions having a
favourable effect on production costs.

An operating pressure in excess of atmospheric
pressure has the effect of reducing the volume of $CO_2$
produced, and accordingly more water and TDI will be
required to generate a quantity of $CO_2$ (or other gas)

(PCT13009)                          - 4 -
(2.7.81)

appropriate to the production of a foam having a density similar to that produced by a conventional process operated at atmospheric pressure.  However, the increased amount of water leads to an increase in the amount of amines, and this increase, in its turn, increases the amount of urea and gives a foam of increased hardness.

EXAMPLES OF THE BEST MODE FOR CARRYING OUT THE INVENTION

The invention will now be described further, by way of example only, and with reference to the following Examples 1 to 5 in which Examples 2 and 5 are examples of the process of the invention whereas Examples 1, 3 and 4 are comparative examples of processes not in accordance with the invention.

EXAMPLE 1

A flexible polyurethane foam is prepared using the following formulation in a machine having four jets in the mixing head and operating at 4000 r.p.m.

|                                              | Parts by weight |
| -------------------------------------------- | --------------- |
| Polypropyleneglycol molecular weight 4200    | 100             |
| Toluene diisocyanate 80/20                   | 49.97           |
| Water                                        | 4.00            |
| Dimethylethanol amine                        | 0.35            |
| Silicone Oil                                 | 1.00            |
| Tin Octoate                                  | 0.25            |
| Dioctylphthalate                             | 2.50            |

The materials are introduced through the respective jets into the mixing chamber in accordance with the following scheme:-

(PCT13009)  — 5 —
(2.7.81)

| | Material | Rate of Flow | |
|---|---|---|---|
| Jet 1 | Polypropyleneglycol | 60 | kg/min. |
| Jet 2 | Toluene diisocyanate | 29.38 | kg/min |
| Jet 3 | Mixture of water, dimethylethanol amine, amine and silicone oil | 3.210 | kg/min. |
| Jet 4 | Balance of materials | 1.650 | kg/min. |

After mixing for several seconds the mixture is led to a 100 x 100 x 100 cm mould at atmospheric pressure (710mm Hg gauge). The resultant foam had a density of 24.5 $kg/m^3$.

EXAMPLE 2

The formulation of Example 1 is delivered to the mixing head under like flow conditions, is led to a mould of similar dimensions after having been mixed for ten seconds and is allowed to foam in a reduced pressure environment (350mm Hg gauge). The resultant foam has a density of 14.1 $kg/m^3$.

EXAMPLE 3

The following formulation was used to produce a foam of like density to that set forth in Example 2, the process being operated at atmospheric pressure, (710mm Hg gauge).

| | |
|---|---|
| Polypropyleneglycol | 100. |
| Toluene diisocyanate | 59.12 |
| Water | 5.00 |
| Dimethylethanol amine | 0.35 |
| Silicone Oil | 1.00 |
| Tin Octoate | 0.25 |
| Dioctylphthalate | 2.50 |
| Monofluorotrichloromethane | 15.00 |

It is to be observed that an increased amount of toluene diisocyanate is required, and this increase, together with the additional fifteen parts of monofluorotrichloromethane for every hundred parts of polyol, significantly increases the cost of the foam in relation

(PCT13009)                    - 6 -
(2.7.81)

to that produced in accordance with Example 2.

EXAMPLE 4

A foam was prepared under normal atmospheric pressure conditions, using the following formulation:

Polypropyleneglycol                    100.

Toluene diisocyanate                    34.76

Water                                    2.60

Dimethylethanol amine                    0.50

Silicone Oil                             0.80

Tin Octoate                              0.20

Dioctylphthalate                         2.00

The resultant foam had a density of 34.2 kg/m$^3$, and an indentation hardness of 15.9 kg to UNE Standard 14.

EXAMPLE 5

The formulation of Example 1 is delivered to the mixing head under like conditions and a foam of a density of 34.1 kg/m$^3$ is obtained by foaming in a pressure chamber at 1 kg/cm$^2$ pressure. The indentation hardness of this foam was 60 kg to UNE Standard 14.

Operation of the process as hereinproposed in a closed-circuit system provides the great advantage, as far as the operators are concerned, that the gases released during the process can readily be contained, and thus the operators are not under any risk. Additionally, monofluorotrichloromethane gases, on release, may easily be collected and compressed for subsequent recovery. Furthermore, in the context of a closed-circuit system an increased amount of monofluorotrichloromethane may be used, thereby reducing the TDI requirement, without increasing the manufacturing cost of the foam, since the monofluorotrichloromethane is recoverable.

(PCT13009)                    - 7 -
(10.7.81)

INDUSTRIAL APPLICABILITY

The process as hereinproposed allows of the production at a lower price of softer foams of like density, or of foams of characteristics similar to those of foams produced by conventional methods, simply by reducing the pressure at which the foaming takes place. Alternatively, foams of similar density but higher hardness than foams produced at atmospheric pressure may be produced simply by increasing the pressure at which the foaming takes place.

The invention is of particular application to the production of foam in block or moulded form, especially large blocks having dimensions of the order of two metres by one metre by one metre.

It has been found that the density change brought about by the affect of reduced or increased pressure is of the order of about 3 $kg/m^3$ for each 100mm by which the maintained pressure falls below or exceeds the prevailing atmospheric pressure. The actual pressure selected will depend on the nature of the foam required.

For a low density foam the pressure will be reduced (by at least say 50mm corresponding to $1\frac{1}{2}$ $kg/m^3$ density reduction, and preferably more up to say 650mm) so that the foam expands well without need for incorporation of high proportions of organic blowing agent.

For a high density foam, the pressure will be increased (again by at least 50mm corresponding to $1\frac{1}{2}$ $kg/m^3$ density increase, and preferably more up to say 4 $kg/cm^2$) and expansion of the foam is restrained. With the conventional foaming procedure, water content in the reaction mixture gives rise to the production of hardening urea groups but the hardening effect is offset by the expansion of the foam (by the carbon dioxide produced by reaction of the water with the isocyanate) which disperses the urea groups and diminishes the effect thereof. With the increased pressure process of the present invention, sufficient water can be incorporated to give a desired level of urea group production without this giving rise to undue foam expansion. Accordingly such process permits of the formation of foams which are relatively hard yet which are flexible and may have conventional densities, it being understood that increased hardness in a flexible foam may be desirable, particularly for example for furniture applications, in so far as such foams give good support. In general it will be appreciated that the present invention gives greater freedom for the production of foams of desired density and hardness by appropriate selection of the pressure and chemical formulation.

The process of the invention may be performed using a conventional mixing head which acts to mix the ingredients of the reaction mixture and then feeds same to a cylindrical chamber in communication with the bottom of a reaction vessel in the form of a large rectangular open-topped box, such chamber having therein a piston movable within the chamber to sweep the contents thereof out of the chamber into the bottom of the box. With the conventional process the reaction mixture would be allowed to foam and expand within the box whilst this is open to the atmosphere. In accordance with the present invention, however, such box is enclosed as for example by application of a lid to the top of same or by insertion of the box bodily into an outer closable chamber and the pressure conditions within the box are controlled whilst the reaction mixture reacts and expands. Where high pressure conditions are required it may be sufficient simply to rely on the increase in pressure on sealing of the box caused by rising of the foam and also the evolution of gaseous products such as carbon dioxide, isocyanate fumes, organic vapours. Indeed where a substantially constant high pressure is to be maintained it may be necessary to provide a relief valve in communication with the box which allows release of air and gaseous products when the pressure exceeds the predetermined constant value. Alternatively or additionally and as appropriate the box may be connected to a compression pump and this may be operated in conjunction with a pressure gauge, relief valve, switching controls as appropriate to maintain a desired pressure. Where a low pressure is required the box may be connected to a vacuum pump and appropriate controls and auxiliary equipment may be provided to enable a substantially constant reduced pressure to be maintained. Appropriate recovery apparatus may be interposed between the vacuum pump and the box where organic blowing agent or other substances are to be recovered.

The reaction mixture is maintained in the enclosed box until such mixture has gelled and the foam has reached approximately a maximum height this being determined on a pre-assessed time basis or alternatively by monitoring the reaction via a sight glass and/or with appropriate sensor equipment.

The pressure is then returned to atmospheric and the box is opened or removed from the enclosing chamber to enable the resulting block of foam to be removed from the box.

It is also possible to operate the process of the invention on a continuous basis, for example, by discharging the reaction mixture to a conveyor belt running within a chamber which is enclosed and maintains required pressure conditions around the belt as the mixture reacts and foams thereon.

Where the process is operated at reduced pressure in the presence of fluorocarbon 11 the pressure reduction permits a fluorocarbon saving (in parts per 100 parts polyol) as follows:

| Pressure reduction (mm Hg) | Saving |
|---|---|
| 50 | 2.5 |
| 100 | 6 |
| 200 | 13 |
| 300 | 23 |
| 400 | 35 |

(PCT13009)                    - 11 -
(7.7.81)

Claims:

1.    A method for the production of synthetic foamed
plastics materials using a reaction mixture based on
a polyol, a polyisocyanate and a blowing agent,
characterised by foaming under controlled conditions
of pressure.

2.    A method according to claim 1, characterised in
that the process is operated at substantially constant
pressure which differs from the prevailing atmospheric
pressure.

3.    A method according to claim 1 or 2, characterised
in that the process is operated in a reaction chamber
which is connected to a vacuum pump which operates
to maintain the pressure in the chamber below prevailing
atmospheric pressure.

4.    A method according to claim 1 or 2, characterised
in that the process is operated in a reaction chamber
in which the pressure rises above prevailing atmospheric
pressure due to foaming of and production of gases by
the reaction mixture.

5.    A method according to claim 4, characterised in
that the chamber is also pressurised by the action of
a compression pump connected to the chamber.

6.    A method according to any one of claims 1 to 5,
characterised by the performance of the following steps:
the reaction mixture is introduced into a reaction
chamber before completion of foaming thereof;
the said reaction chamber is enclosed;
the pressure within the enclosed chamber is controlled
whilst the reaction mixture foams;
the reaction chamber is opened and the foamed mixture
is removed from same.

7.    A method according to any one of claims 1 to 6,
wherein water is utilised to provide the said blowing
agent, characterised in that said water reacts with the polyisocyanate to produce carbon dioxide under said conditions of controlled pressure.

8.   A method according to any one of claims 1 to 7, characterised in that the reaction mixture also contains a volatile organic substance as a blowing agent, characterised in that the process is operated under closed-circuit conditions and evolved said organic substance is recovered from exhaust gases of the process.

9.   A method according to any one of claims 1 to 8, characterised in that the said reaction mixture includes one or more of silicone, an amine catalyst, an organometallic catalyst.

10.   Polyurethane foam material when made by the method of any one of claims 1 to 9.

European Patent
Office

**EUROPEAN SEARCH REPORT**

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| X | US - A - 3 088 172 (WEINBRENNER et al.) <br> * claim 4; column 2, lines 26 to 32 and lines 45 to 54 * | 1,2,7 | C 08 J 9/04 <br> C 08 G 18/14 <br> B 29 D 27/04 |
| | GB - A - 839 188 (IMPERIAL CHEMICAL INDUSTRIES) <br> * claim 1; example 1; page 1, lines 31 to 40 and lines 66 to 71 * | 1,2,3, 7,9 | |
| | DE - A - 2 056 654 (BAYER) <br> * claims 1, 2; pages 9, 10 * | 1,2,4, 6 | TECHNICAL FIELDS SEARCHED (Int. Cl.³) <br><br> B 29 D 27/00 |
| P,X | EP - A1 - 0 023 749 (IMPERIAL CHEMICAL INDUSTRIES) <br> * claims 1, 5; drawing * | 1,3,6, 7 | C 08 G 18/00 <br> C 08 J 9/00 |
| P,X | DE - A1 - 2 924 459 (PLA-MA-LTD.) <br> * claims 1, 2; page 3 * | 1,2,3 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 25-09-1981 | MARX |

EPO Form 1503.1 06.78